# EUROPÄISCHE PATENTSCHRIFT

(11) **EP 3 571 108 B1**
(45) Veröffentlichungstag und Bekanntmachung des Hinweises auf die Patenterteilung: **25.11.2020**
(21) Anmeldenummer: 18702124.1
(22) Anmeldetag: 16.01.2018
(51) Int. Cl.: B62B 7/00, B62B 7/12

(54) **RAHMEN EINES KINDERWAGENS**
FRAME OF A CHILD'S CARRIAGE
CADRE DE VOITURE D'ENFANT

(30) Priorität: 19.01.2017 DE 102017100974
(43) Veröffentlichungstag der Anmeldung: 27.11.2019
(73) Patentinhaber: Emmaljunga Barnvagnsfabrik AB, 28268 Vittsjö (SE)
(72) Erfinder: PERSSON, Christian, 28268 Vittsjö (SE); WEDIN, Erik, 13247 Saltsjö-Boo (SE)
(74) Vertreter: Müller Schupfner & Partner Patent- und Rechtsanwaltspartnerschaft mbB
(86) Internationale Anmeldenummer: PCT/EP2018/050926
(87) Internationale Veröffentlichungsnummer: WO 2018/134169

(56) Entgegenhaltungen:
- WO-A2-2016/130471
- GB-A- 2 426 231
- GB-A- 2 431 140
- US-A1- 2003 227 157
- US-A1- 2014 346 756

## Beschreibung

Die vorliegende Erfindung betrifft einen Rahmen für einen Kinderwagen.

Rahmen für Kinderwagen, welche klappbar und mit zueinander beweglichen Elementen ausgestattet sind, sind aus dem Stand der Technik bereits bekannt. Dabei bedarf es in den meisten Fällen aufwendiger Gelenk- und Strebenanordnungen, um ein Zusammenklappen des Kinderwagens zu ermöglichen, wenn dieser verstaut werden soll, und gleichzeitig im ausgeklappten Zustand die nötige Stabilität zu erreichen. Weiterhin ist es aus dem Stand der Technik bekannt, die Breite eines Kinderwagens anzupassen, so dass der Kinderwagen sowohl für die Beförderung eines Kindes als auch für die Beförderung zweier Kinder eingestellt werden kann. Bei den aus dem Stand der Technik bekannten Kinderwagen ist aber derzeit eine Einstellbarkeit bzw. Anpassbarkeit der Größe des Kinderwagens nur unter Inkaufnahme von Stabilitätseinbußen möglich.

Die US 2014/346756 A1 und die WO 2016/130471 A2 offenbaren jeweils einen Rahmen eines Kinderwagens, welcher in zwei Stellungen gebracht werden kann, wobei in der ersten Stellung der Rahmen kürzer als in der zweiten Stellung ist und wobei in der zweiten Stellung der Rahmen zur Festlegung einer größeren Anzahl von Transporteinheiten ausgelegt ist, als in seiner ersten Stellung.

Aufgabe der vorliegenden Erfindung ist die Bereitstellung eines in seiner Größe einstellbaren Kinderwagens, der besonders einfach zu handhaben ist und dennoch eine verbesserte Stabilität und Lebensdauer erreicht.

Diese Aufgabe wird gelöst mit einem Rahmen eines Kinderwagens gemäß Anspruch 1. Weitere Vorteile und Merkmale der vorliegenden Erfindung ergeben sich aus den abhängigen Ansprüchen.

Erfindungsgemäß umfasst der Rahmen einen ersten Rahmenbereich, einen zweiten Rahmenbereich und einen dritten Rahmenbereich, wobei der erste Rahmenbereich in einem ersten Schwenkbereich schwenkbar um eine erste Schwenkachse am zweiten Rahmenbereich festlegbar ist, wobei der zweite Rahmenbereich in einem zweiten Schwenkbereich schwenkbar um eine zweite Schwenkachse am dritten Rahmenbereich festgelegt ist, wobei ein erster Aufnahmebereich an zumindest einem der Rahmenbereiche vorgesehen ist, an welchem eine Transporteinheit formschlüssig festlegbar ist, wobei der Rahmen in eine erste Stellung oder eine zweite Stellung bringbar ist bzw. zwischen diesen verlagerbar ist, wobei der Rahmen in der ersten Stellung dafür ausgelegt ist, zumindest eine Transporteinheit aufzunehmen, und wobei der Rahmen in der zweiten Stellung dafür ausgelegt ist zumindest zwei Transporteinheiten aufzunehmen. Die erste und die zweite Stellung des Rahmens sind dabei beide dadurch gekennzeichnet, dass der Rahmen des Kinderwagens dafür ausgelegt ist, ein oder mehrere Kinder oder Transportgut mittels der am Rahmen festlegbaren Transporteinheiten zu transportieren. Mit anderen Worten ist weder die erste noch die zweite Stellung der zusammengefaltete Zustand des Rahmens, in welchem dieser platzsparend verstaut werden kann. Vielmehr ist der Rahmen sowohl in der ersten, als auch in der zweiten Stellung in der Lage eine oder mehrere Transporteinheiten aufzunehmen und somit betriebsbereit zum Transport eines Kindes oder mehrerer Kinder und/oder von Gepäckstücken. Der erfindungsgemäße Rahmen weist drei Rahmenbereiche auf, wobei jeweils zwei der Rahmenbereiche in je einem Schwenkbereich aneinander grenzen und in diesem Schwenkbereich schwenkbar zueinander aneinander festgelegt sind. Der erste Rahmenbereich ist dabei mit Vorteil an der Vorderseite des Rahmens angeordnet und weist an seinem, dem ersten Schwenkbereich abgewandten, distalen Ende eine Querstrebe auf, an welcher mit Vorteil die Vorderräder eines Kinderwagens festlegbar oder festgelegt sind. Der erste Rahmenbereich weist mit Vorteil zwei im Wesentlichen parallel zueinander ausgerichtete und voneinander beabstandete Streben auf, welche über einen Querbereich bzw. die Querstrebe des ersten Rahmenbereichs miteinander verbunden und auf diese Weise aneinander festgelegt sind und welche im ersten Schwenkbereich mit jeweils entsprechenden Rahmenelementen des zweiten Rahmenbereichs in Eingriff stehen. An einem der Rahmenbereiche ist zumindest ein erster Aufnahmebereich vorgesehen oder festgelegt, welcher dazu dient, eine Transporteinheit formschlüssig mit dem Rahmen zu verbinden. Mit Vorteil ist der erste Aufnahmebereich eine Anordnung von zumindest zwei Aufnahmeflanschen, welche relativ zum Rahmen verdreh- und verlagerungssicher, bevorzugt formschlüssig, am Rahmen festlegbar sind und welche eine entsprechende Eingriffsgeometrie zum Eingriff mit einer Transporteinheit aufweist. Die Transporteinheit ist vorzugsweise ein Sitzteil eines Kinderwagens, eine Liegewanne eines Kinderwagens, insbesondere für Säuglinge, oder ein Aufnahmekorb zum Transport von Gegenständen sein. Durch das Anpassen nur der für die Befestigung von einer oder einer Vielzahl von Transporteinheiten vorgesehenen Bereiche des Kinderwagens, können die übrigen Abschnitte des Rahmens sehr stabil, da nicht in ihrer Größe anpassbar, ausgelegt werden. Es wird hierbei ein guter Kompromiss zwischen Stabilität und Vielseitigkeit des Rahmens eines Kinderwagens erreicht.

Erfindungsgemäß weist der Verbund aus dem ersten und dem zweiten Rahmenbereich in der zweiten Stellung eine größere Erstreckung längs einer Längsachse auf als in der ersten Stellung. Vorzugsweise durch Verschwenken des ersten Rahmenbereichs relativ zum zweiten Rahmenbereich und des zweiten Rahmenbereichs relativ zum dritten Rahmenbereich lässt sich der Rahmen des Kinderwagens von einer ersten Stellung in eine zweite Stellung bringen. In der zweiten Stellung weist der Rahmen des Kinderwagens dabei eine größere Erstreckung längs einer Längsachse, d.h. mit anderen Worten eine größere Erstreckung in Geradeausfahrrichtung des mit dem Rahmen ausgestatteten Kinderwagens, auf. Durch die größere Erstreckung längs oder parallel zur Längsachse lässt sich dabei zum einen zusätzlicher Stauraum am Rahmen des Kinderwagens freigeben. Hierbei können vorzugsweise zwei Transporteinheiten in Tandemanordnung hintereinander am Rahmen festgelegt und transportiert werden. Zum anderen findet bei der Umstellung des Rahmens von der ersten Stellung in die zweite Stellung eine Absenkung des ersten Aufnahmebereiches statt, wobei der erste Aufnahmebereich mit näher an den Boden, auf welchem der mit dem Rahmen ausgestattete Kinderwagen abrollt, gelangt. Hierdurch kann der Schwerpunkt des Rahmens gesenkt werden, wobei sich insbesondere die Fahrstabilität in der zweiten Stellung, in welcher mit Vorteil ein größeres Gewicht an dem Rahmen des Kinderwagens festlegbar ist, erhöht. Die Längsachse ist zweckmäßigerweise parallel zu einer Schwenkachse, welche senkrecht zu der ersten und/oder zweiten Schwenkachse steht.

Erfindungsgemäß wird die Verlängerung des Verbundes aus erstem und zweitem Rahmenbereich längs der Längsachse ausschließlich durch ein Verschwenken der Rahmenbereiche zueinander im ersten Schwenkbereich erreicht. Insbesondere kann bei dieser bevorzugten Ausführungsform auf teleskopisch verschiebbare Abschnitte an den Rahmenbereichen verzichtet werden, was zu einen die Stabilität der Rahmenbereiche in sich erhöht und zum anderen das Gewicht senkt, da keine sich überlappenden Abschnitte an den Rahmenbereichen vorgesehen sind. Die in dem ersten Schwenkbereich vorgesehenen Eingriffsmittel zum Verrasten der Rahmenbereiche in einem bestimmten Winkel zueinander weisen dabei ein besonders geringes Gewicht gegenüber teleskopisch verschiebbaren Abschnitten auf.

Weiterhin bevorzugt weist auch der Verbund aus dem zweiten und dem dritten Rahmenbereich in der zweiten Stellung eine größere Erstreckung längs einer Längsachse als in der ersten Stellung auf, wobei die Verlängerung des Verbundes aus dem zweitem und dem drittem Rahmenbereich längs der Längsachse auch durch ein Verschwenken der Rahmenbereiche zueinander im zweiten Schwenkbereich verursacht ist. Der dritte Rahmenbereich wird, um in die zweite Stellung des Rahmens zu gelangen, mit Vorteil relativ zum zweiten Rahmenbereich verschwenkt. Hierdurch kann das durch das Schwenken des zweiten Rahmenbereiches im ersten Schwenkbereich verursachte aufstellen des dritten Rahmenbereiches ausgeglichen werden. Dabei ist der dritte Rahmenbereich, welcher vorzugsweise den Griff zum Schieben des Kinderwagens aufweist, mit Vorteil mit teleskopisch ineinander verschiebbaren Elementen ausgebildet. Auf diese Weise lässt sich der Winkel des dritten Rahmenbereiches zur Horizontalen und die Griffhöhe für einen Anwender optimal anpassen.

Besonders bevorzugt ist der erste Schwenkbereich in der zweiten Stellung tiefer, d.h. näher am Boden auf dem der Kinderwagen steht, angeordnet als in der ersten Stellung. Somit senkt sich die Lage des vorzugsweise benachbart zum oder unmittelbar am ersten Schwenkbereich angeordneten ersten Aufnahmebereich. In der zweiten Stellung des Rahmens kann somit die am ersten Aufnahmebereich festgelegte Transporteinheit näher am Boden angeordnet werden, was in einer verbesserten Stabilität des Kinderwagens gegen Umfallen resultiert.

Alternativ oder zusätzlich weist der erste Aufnahmebereich in der zweiten Stellung eine größere Erstreckung quer, insbesondere senkrecht, zur Längsachse des Rahmens auf als in der ersten Stellung. Der erste Aufnahmebereich ist derart ausgelegt, dass seine Breite, bezogen auf die Längsachse des Rahmens des Kinderwagens, veränderbar ist. Dabei ist es insbesondere bevorzugt, dass der erste Aufnahmebereich in der ersten Stellung des Rahmens schmaler ist, als in der zweiten Stellung. In der ersten Stellung ist dabei nur eine Transporteinheit am ersten Aufnahmebereich festlegbar, wobei die Breite des ersten Aufnahmebereiches besonders schmal ist. In der zweiten Stellung ist der erste Aufnahmebereich derart verbreitert, dass zwei Transporteinheiten nebeneinander am ersten Aufnahmebereich festlegbar sind. Neben der Möglichkeit, die Länge des Rahmens durch Verschwenken des ersten und des zweiten Rahmenbereiches zueinander anzupassen, kann auch zur Änderung der Breite des ersten Aufnahmebereiches die Anzahl der am Rahmen zur Verfügung stehenden Befestigungspositionen für Transporteinheiten angepasst werden. Darüber hinaus ist die Breite des ersten Aufnahmebereiches in zweiten Stellung zumindest ein 1,8-faches, vorzugsweise ein zumindest 2-faches und besonders bevorzugt ein bis zu 2,5-faches der Breite des ersten Aufnahmebereiches in der ersten Stellung des Rahmens. Mit Vorteil ist der erste Aufnahmebereich derart ausgelegt, dass in der zweiten Stellung zwei Transporteinheiten derart nebeneinander am Rahmen festlegbar sind, dass sie einen Mindestabstand von 12 mm, besonders bevorzugt von 15 mm voneinander aufweisen. Hierdurch kann die Gefahr des Einklemmens von Körperteilen zwischen den Transporteinheiten vermindert werden. Durch die nachfolgend beschriebene, stabile Ausbildung der Rahmenbereiche, wird dieser Mindestabstand auch gehalten, wenn der Rahmen mit zwei schwer beladenen Transporteinheiten belastet wird.

Mit Vorteil weist der erste Rahmenbereich und/oder der zweite Rahmenbereich und/oder der dritte Rahmenbereich in der ersten Stellung dieselbe Breite auf wie in der zweiten Stellung. Die Breite des oder der Rahmenbereiche ist vorzugsweise die maximale Erstreckung senkrecht zur Längsachse des Rahmens oder orthogonal zu der vertikalen Mittelebene des Rahmens. Es ist dabei ein bevorzugtes Merkmal der vorliegenden Erfindung, dass zur Verbreiterung des ersten Aufnahmebereiches oder zur Verbreiterung der Spur der Vorderräder und/oder der Hinterräder des Kinderwagens nicht auch zwangläufig andere Bereiche des Rahmens verbreitert werden. Mit anderen Worten ist vorzugsweise nur der erste Aufnahmebereich und gegebenenfalls die Spur der Vorderräder oder Hinterräder des Rahmens verbreiterbar, wobei die restlichen Bereiche des Rahmens in der zweiten Stellung dieselbe Breite aufweisen wie in der ersten Stellung. Die Stabilität des Rahmens kann hierdurch deutlich verbessert werden ohne dass sich das Gewicht des Rahmens erhöht, da nur wenige zueinander verschiebbare und insbesondere teleskopisch ausgebildete Elemente am Rahmen benötigt werden. Durch die bevorzugte Ausbildung der Rahmenbereiche als geschlossene rechteckige Einheiten, sind diese in sich sehr stabil und können insbesondere Biegemomente, welche von den Rädern auf den Rahmen übertragen werden besonders gut abstützen, wobei der Sturz der Räder nahezu unverändert bleibt. Der Verzicht auf teleskopisch zueinander verschiebbare Abschnitte innerhalb der Rahmenbereichen selbst, sorgt dafür, dass ein für teleskopisch verschiebbare Einheiten typisches Spiel bei Belastung an den Rahmenbereichen nicht auftritt.

Mit Vorteil ist der zweite Rahmenbereich an einem ersten distalen Ende schwenkbar mit dem ersten Rahmenbereich verbunden, wobei der zweite Rahmenbereich an seinem dem ersten distalen Ende gegenüberliegenden Ende schwenkbar mit dem dritten Rahmenbereich verbunden ist. Mit anderen Worten ist der erste Schwenkbereich an einem ersten distalen Ende des zweiten Rahmenbereichs angeordnet und der zweite Schwenkbereich an dem dem ersten distalen Ende gegenüberliegenden zweiten distalen Ende des zweiten Rahmenbereichs. In einer Seitenansicht des Rahmens ergibt sich somit eine im Wesentlichen N-förmige Ausbildung des Rahmens. Diese N-förmige Ausbildung des Rahmens ermöglicht, durch Verschwenken der jeweiligen Rahmenbereiche relativ zueinander die Gesamtlänge des Rahmens zu erhöhen. Darüber hinaus kann der Rahmen, in dem die einzelnen Rahmenbereiche aufeinander zu geschwenkt werden, soweit sie parallel oder zumindest annähernd parallel zueinander stehen, besonders kompakt zusammengefaltet werden.

Mit Vorteil erstreckt sich der erste Rahmenbereich im Wesentlichen in einer ersten Ebene, wobei sich der zweite Rahmenbereich im Wesentlichen in einer zweiten Ebene erstreckt und sich der dritte Rahmenbereich im Wesentlichen in einer dritten Ebene erstreckt. Als Erstreckung im Wesentlichen in einer Ebene ist im vorliegenden Fall gemeint, dass sich die Rahmenbreiten jeweils annähernd geradlinig erstrecken sollen, wobei jeder Rahmenbereiche vorzugsweise ein Rechteck aufspannt und wobei die Mittellinien der jeweiligen Profile des Rahmens zum überwiegenden Teil in einer Ebene liegen. Dies beinhaltet aber auch Geometrien der Rahmenbereiche, welche aus der Ebene hinausragen, wie beispielsweise die Übergangsbereiche zwischen dem jeweiligen Rahmenbereich und dem daran festgelegten Schwenkbereich. Mit anderen Worten bedeutet eine Erstreckung im Wesentlichen in einer Ebene, dass eine Ebene gezogen werden kann, welche annähernd sämtliche Bereiche des Rahmenbereichs schneidet. Die im Wesentlichen flache oder in einer Ebene liegende Erstreckung der Rahmenbereiche hat den Vorteil, dass der Rahmen besonders kompakt zusammengefaltet werden kann, da die jeweiligen Rahmenbereiche im diesem Fall vorzugsweise parallel zueinander und aneinander anliegend eingestellt werden können, wodurch sich die größte Raumersparnis an einem zusammengefalteten Rahmen erreichen lässt.

Besonders bevorzugt ist dabei die erste Ebene in der ersten Stellung und/oder in der zweiten Stellung des Rahmens im Wesentlichen parallel zur dritten Ebene angeordnet. Die parallele Anordnung der ersten und der dritten Ebene zueinander hat den Vorteil, dass die Gelenkbereiche zwischen dem ersten und dem zweiten Rahmenbereich und dem zweiten und dem dritten Rahmenbereich für die gleichen Verschwenkwinkel zueinander ausgelegt sind. Auf diese Weise lassen sich die gleichen Bauteile für beide Schwenkbereiche verwenden, wodurch die Herstellungskosten für einen Rahmen gemäß der vorliegenden Erfindung reduziert werden können.

Besonders bevorzugt ist der zwischen der ersten Ebene und der zweiten Ebene aufgespannte erste Winkel in der ersten Stellung des Rahmens kleiner als in der zweiten Stellung. Mit anderen Worten wird um den Rahmen von der ersten in die zweite Stellung zu bringen der zwischen der ersten und der zweiten Ebene aufgespannte Winkel vergrößert. Hierdurch wird das in der Seitenansicht auf den Rahmen definierte Dreieck, dessen Schenkel der erste und der zweite Rahmenbereich sind, in der ersten Stellung des Rahmens spitzwinkliger und in der zweiten Stellung des Rahmens stumpfwinkliger ausgebildet. Gleichzeitig kann hierdurch der erste Schwenkbereich in der zweiten Stellung abgesenkt werden, wodurch sich der Schwerpunkt der im Bereich des ersten Schwenkbereichs am Rahmen befestigten zu transportierenden Lasten nach unten verlagert und der Kinderwagen somit stabiler gegen seitliches Umkippen ausgelegt ist.

Weiterhin bevorzugt ist der zwischen der zweiten Ebene und der dritten Ebene aufgespannte zweite Winkel in der ersten Stellung des Rahmens kleiner als in der zweiten Stellung. Am dritten Rahmenbereich ist mit Vorteil der Handgriff für einen Anwender des Rahmens bzw. des mit dem Rahmen ausgestatteten Kinderwagens ausgebildet. Durch das Aufklappen des zweiten und des dritten Rahmenbereichs in der zweiten Stellung des Rahmens wird dadurch der in Schwerkraftrichtung wirkende Hebelarm für eine in Schwerkraftrichtung vom Anwender aufzubringende Kraft vergrößert. Mit anderen Worten kann die größere Länge des von dem ersten und dem zweiten Rahmenbereich definierten Teils des Rahmens dadurch kompensiert werden, dass auch der dritten Rahmenbereich mit einem in Schwerkraftrichtung größeren Hebel ausgestattet wird, wodurch es dem Anmelder möglich ist unter Aufbringung der gleichen Kraft den Kinderwagen allein auf die Hinterachse zu stützen und so beispielsweise Bordsteinkanten zu überwinden. Die Hinterräder des Kinderwagens sind vorzugsweise auf Höhe des zweiten Schwenkbereichs oder koaxial zur zweiten Schwenkachse am Rahmen festlegbar. Es versteht sich, dass der dritte Rahmenbereich eine teleskopische Anordnung von Rahmenteilen aufweisen kann, wodurch die beim Vergrößern des zweiten Winkels auftretende Absenkung des vom zweiten Schwenkbereich abgewandten distalen Endes des dritten Rahmenbereichs dadurch kompensiert werden kann, dass der dritte Rahmenbereich durch Ausfahren der Teleskoprohre verlängert wird. Es versteht sich, dass auch hierbei der Hebelarm für eine vom Anwender auf den Handgriffbereich am dritten Rahmenbereich aufzubringende Kraft deutlich vergrößert werden kann, wodurch sich die Handhabbarkeit des Kinderwagens bzw. des Rahmens in der zweiten Stellung deutlich verbessert. Es versteht sich an dieser Stelle aber, dass, vorzugsweise wenn der Anwender des Rahmens den größeren Hebelarm nicht benötigt und auch in der zweiten Stellung eine kompaktere Erstreckung des Rahmens bevorzugt, der zweite Winkel zwischen dem zweiten und dem dritten Rahmenbereich auch spitzwinkliger gewählt werden kann. Vorzugsweise ist hierfür eine separate Einstellmöglichkeit für den ersten Winkel und für den zweiten Winkel gegeben.

Mit Vorteil ist der erste Aufnahmebereich am ersten Schwenkbereich vorgesehen, wobei der erste Aufnahmebereich zwei innere Aufnahmeflansche aufweist, welche an einer inneren Aufnahmestange form- und/oder kraftschlüssig festlegbar sind. Als Anordnung des ersten Aufnahmebereichs am ersten Schwenkbereich wird mit Vorteil eine Anordnung des ersten Aufnahmebereichs in unmittelbarer Nähe zum ersten Schwenkbereich angesehen. Darüber hinaus ist vorzugsweise eine Aufnahmestange vorgesehen, welche sich längs der ersten Schwenkachse erstreckt. Die Stange dient wiederum der Aufnahme zweier innerer Aufnahmeflansche, welche form- und/oder kraftschlüssig an der Aufnahmestange eingreifen und entsprechende Eingriffs- und Haltemittel für die Festlegung der Transporteinheit aufweisen. Als Aufnahmeflansch wird im Rahmen der vorliegenden Erfindung bevorzugt ein Bauteil angesehen, welches mit der Aufnahmestange und mit einer Transporteinheit in form- und kraftschlüssigen Eingriff bringbar ist. Dabei sind die Aufnahmeflansche bevorzugt mehrteilig ausgebildet, wobei beispielsweise zumindest zwei Spritzgussbauteile zu einem Aufnahmeflansch zusammengesetzt werden können. Mit Vorteil sind die inneren Aufnahmeflansche dabei längs der Aufnahmestange verschiebbar vorgesehen, wobei in diesem Zustand lediglich ein Formschluss quer zur Schwenkachse wirkt. Sobald die richtige Position der inneren Aufnahmeflansche an der inneren Aufnahmestange eingestellt ist, können die inneren Aufnahmeflansche kraftschlüssig an der inneren Aufnahmestange verspannt werden. Durch die Einstellbarkeit der Position der inneren Aufnahmeflansche an der inneren Aufnahmestange längs der Schwenkachse ist es möglich, die Aufnahmeflansche an verschiedene Transporteinheiten mit entsprechenden Eingriffsmitteln anzupassen.

Weiterhin bevorzugt weist der erste Aufnahmebereich zumindest einen äußeren Aufnahmeflansch auf, welcher an einer äußeren Aufnahmestange festgelegt ist, wobei die äußere Aufnahmestange längs der ersten Schwenkachse in die innere Aufnahmestange teleskopisch einschiebbar ist. Mit Vorteil sind an dem ersten Aufnahmebereich zwei äußere Aufnahmeflansche vorgesehen, welche mit jeweils einer äußeren Aufnahmestange von je einer Seite in die innere Aufnahmestange teleskopisch einschiebbar sind. Durch den oder die äußeren Aufnahmeflansche ist es möglich, den Bereich, an welchem eine oder eine Vielzahl von Transporteinheiten an dem ersten Aufnahmebereich festlegbar ist, zu vergrößern, insbesondere bevorzugt zu verbreitern. Hierfür kann die äußere Aufnahmestange längs der ersten Schwenkachse von der Mittelebene der inneren Aufnahmestange weg verlagert werden, wodurch diese nach außen wandert. Im Zuge dessen wird auch der äußere Aufnahmeflansch bezogen auf die innere Aufnahmestange nach außen verlagert. Eine Transporteinheit kann in dieser Stellung an einer Seite am äußeren Aufnahmeflansch und an der gegenüberliegenden Seite an einem der inneren Aufnahmeflansche festgelegt werden, wobei der Schwerpunkt der Transporteinheit mit Vorteil parallel zur ersten Schwenkachse versetzt zum Schwerpunkt des Rahmens selbst liegt. Mit anderen Worten kann auf diese Weise eine Transporteinheit außermittig am Rahmen festgelegt werden. Es versteht sich, dass, um zu verhindern, dass die äußeren Aufnahmestangen vollständig aus der inneren Aufnahmestange herausgezogen werden können, ein Anschlag vorhanden ist, welcher die teleskopische Ausfahrbewegung der äußeren Aufnahmestangen begrenzt. Besonders bevorzugt ist es dabei, insbesondere um eine ausreichend hohe Stabilität auch bei ausgefahrener äußerer Aufnahmestange zu erreichen, dass zumindest die Hälfte der Längserstreckung der äußeren Aufnahmestange längs der Schwenkachse innerhalb der inneren Aufnahmestange verbleibt. Es können auf diese Weise besonders hohe Gewichtskräfte, die in der äußeren Aufnahmestange in Biegemomente gewandelt werden, über den äußeren Aufnahmeflansch übertragen werden.

Mit Vorteil steht die Verschiebebewegung der äußeren Aufnahmestange oder der äußeren Aufnahmestangen in Zusammenhang mit der ersten und der zweiten Stellung des Rahmens. Dabei ist es bevorzugt, dass die äußere Aufnahmestange in der ersten Stellung des Rahmens in die innere Aufnahmestange eingeschoben ist, derart, dass der äußere Aufnahmeflansch benachbart oder angrenzend zum ersten Schwenkbereich angeordnet ist, wobei in der zweiten Stellung des Rahmens die äußere Aufnahmestange aus der inneren Aufnahmestange derart herausgezogen ist, dass der äußere Aufnahmeflansch maximal von dem ersten Schwenkbereich beabstandet ist. Es versteht sich in diesem Zusammenhang, dass der maximal ausgezogene Zustand bedeutet, dass immer noch eine Überlappungslänge zwischen der äußeren Aufnahmestange und der inneren Aufnahmestange von zumindest einem Drittel der Längserstreckung der äußeren Aufnahmestange vorhanden ist. Durch die Möglichkeit die äußere Aufnahmestange und damit den äußeren Aufnahmeflansch so nahe wie möglich an dem ersten Schwenkbereich anzuordnen, wenn die zusätzliche Installationsbreite für eine oder mehrere Transporteinheiten am Rahmen nicht benötigt wird, sorgt für eine besonders kompakte und schmale Ausbildung des Rahmens, welche insbesondere kombiniert mit der kürzeren Auslegung des Rahmens im ersten Zustand eine besonders einfache, da wenig ausladende Konfiguration des Rahmens ergibt.

Weiterhin bevorzugt weist die innere Aufnahmestange eine erste Verdrehsicherung und eine zweite Verdrehsicherung auf, welche formschlüssig mit dem ersten Schwenkbereich und/oder mit den inneren Aufnahmeflanschen in Eingriff bringbar ist/sind, um die innere Aufnahmestange und/oder die inneren Aufnahmeflansche gegen Verdrehung relativ zum ersten Rahmenbereich und/oder zum zweiten Rahmenbereich zu sichern. Zusätzlich zu einer kraftschlüssigen Festlegung der Aufnahmeflansche an der Aufnahmestange (sowohl innen als auch außen möglich) ist weiterhin bevorzugt eine erste und eine zweite Verdrehsicherung vorgesehen, welche dafür ausgelegt ist, formschlüssig ein Verdrehen der Aufnahmeflansche um die erste Schwenkachse oder um eine parallel zur ersten Schwenkachse liegende Rotationsachse zu verhindern. Dies sorgt vorzugsweise für eine noch sichere Festlegung einer Transporteinheit am Rahmen. Die Aufnahmeflansche und/oder der erste Schwenkbereich weisen dabei vorzugsweise entsprechend korrespondierende Eingriffsmittel auf, welche mit der ersten und/oder der zweiten Verdrehsicherung in formschlüssigen Eingriff gelangen und somit Drehmomente um die erste Schwenkachse oder um eine parallel zur ersten Schwenkachse aufnehmen und übertragen können.

Mit Vorteil sind dabei die Verdrehsicherungen als quer zur ersten Schwenkachse von der inneren Aufnahmestange abstehende Vorsprünge ausgebildet. Weiterhin bevorzugt sind die Verdrehsicherungen einstückig mit der inneren Aufnahmestange ausgebildet. Als Vorsprünge an der inneren Aufnahmestange ausgebildete Verdrehsicherungen sind besonders einfach herzustellen und können hohe Drehmomente aufnehmen.

Weiterhin bevorzugt ist die erste Verdrehsicherung und die zweite Verdrehsicherung längs der ersten Schwenkachse längs zueinander versetzt und mit einem Winkelversatz um die erste Schwenkachse zueinander verschwenkt angeordnet sind. Die erste und die zweite Verdrehsicherung bilden somit zwei längs der Schwenkachse zueinander versetzte Verdrehsicherungsbereiche, welche jeweils eine Verdrehsicherung in einer bestimmten Winkelstellung bereitstellen. Dabei sind die Verdrehsicherungen in ihrem Querschnitt vorzugsweise identisch ausgebildet, so dass die Eingriffsbereiche der entsprechenden Aufnahmeflansche sowohl mit der ersten Verdrehsicherung als auch mit der zweiten Verdrehsicherung in Eingriff gelangen können. Dieses Ausführungsform zeichnet sich dadurch aus, dass indem die Aufnahmeflansche jeweils zur Mitte der inneren Aufnahmestange hin verlagert werden, diese beispielsweise mit der zweiten Verdrehsicherung in Eingriff gelangen und in einer bestimmten Winkelstellung relativ zur Stange und relativ zu den Rahmenbereichen angeordnet sind. Durch nach außen verlagern der Aufnahmeflansehe gelangen diese außer Eingriff mit der zweiten Verdrehsicherung und in Eingriff mit der ersten Verdrehsicherung, wobei sie um einen Winkelversatz gedreht werden und daher in einer anderen Winkelstellung relativ zu den Rahmenbereichen und zur inneren Aufnahmestange angeordnet sind.

Alternativ bevorzugt sind die erste Verdrehsicherung und die zweite Verdrehsicherung voneinander entlang des Umfangs der inneren Aufnahmestange beabstandet angeordnet und ragen in den ersten Schwenkbereich hinein, wobei in der ersten Stellung des Rahmens ein erster Haltebereich des ersten Schwenkbereichs an der ersten Verdrehsicherung angreift und diese gegen Rotation um die erste Schwenkachse sichert, wobei in der zweiten Stellung des Rahmens ein zweiter Haltebereich des ersten Schwenkbereichs an der zweiten Verdrehsicherung angreift und diese gegen Rotation um die erste Schwenkachse sichert, wobei die innere Aufnahmestange von der ersten Stellung zur zweiten Stellung des Rahmens mit einem Winkelversatz um die erste Schwenkachse rotiert. Der erste und der zweite Haltebereich am ersten Schwenkbereich sind vorzugsweise backenartige Eingriffsgeometrien, welche je nachdem in welcher Stellung der Rahmen sich befindet, an der ersten bzw. an der zweiten Verdrehsicherung angreifen und diese gegen Verdrehung sichern. Dabei ist vorzugsweise je eine Backe eines Haltebereichs mit dem ersten Rahmenbereich verbunden und die gegenüber liegende zweite Backe desselben Haltebereichs mit dem zweiten Rahmenbereich. Durch eine Verschwenkung der Rahmenbereiche zueinander verschwenken auch die Backen in entsprechender Verdrehrichtung um die Schwenkachse. Mit Vorteil sind die erste und die zweite Verdrehsicherung dabei an exakt gegenüber liegenden Seiten der inneren Aufnahmestange an dieser ausgebildet bzw. festgelegt. Dabei stehen die inneren Aufnahmeflansche vorzugsweise sowohl mit der ersten als auch mit der zweiten Verdrehsicherung in formschlüssigem Eingriff, wodurch sich die Festigkeit der Verdrehsicherung und die übertragbaren Drehmomente deutlich erhöhen. Weiterhin bevorzugt ist der Winkelversatz der Aufnahmeflansche nicht mehr abhängig davon, in welcher axialen Befestigungsposition längs der ersten Schwenkachse sich der jeweilige innere Aufnahmeflansch befindet. Vielmehr wird allein durch die Verstellung des Rahmens in die erste oder die zweite Stellung die jeweils für diese Stellung richtige Winkelposition der inneren Aufnahmestange und der daran formschlüssig festgelegten inneren Aufnahmeflansche bereits eingestellt. Es kann darüber hinaus bevorzugt sein, dass auch zwischen der äußeren Aufnahmestange und der inneren Aufnahmestange eine Verdrehsicherung vorgesehen ist, welche dafür sorgt, dass bei der Einstellung der inneren Aufnahmestange in die richtige Winkelposition auch die äußere Aufnahmestange automatisch mit in diese Winkelposition geführt wird, wobei die an der äußeren Aufnahmestange festgelegten äußeren Aufnahmeflansche entsprechend ebenfalls stets die richtige Ausrichtung bezogen auf die Horizontale des Rahmens bzw. des Kinderwagens aufweisen.

Vorzugsweise ist der Winkelversatz gleich dem halben Betrag der Änderung des ersten Winkels zwischen der ersten Stellung und der zweiten Stellung des Rahmens. Ausgehend davon, dass die Vergrößerung des ersten Winkels zwischen dem ersten Rahmenbereich und dem zweiten Rahmenbereich durch eine gleichmäßige Verschwenkung der beiden Rahmenbereiche jeweils um die Hälfte der Änderung des zwischen den Rahmenbereichen aufgespannten Winkels gleicht der Winkelversatz vorzugsweise genau diesen halben Betrag der Änderung des ersten Winkels aus. Für den Fall, dass aufgrund unterschiedlicher Erstreckung des ersten Rahmenbereichs und des zweiten Rahmenbereichs in den jeweils in den Rahmenbereichen verlaufenden Ebenen vorliegt, kann es bevorzugt sein, dass der Winkelversatz in einem anderen Verhältnis zur Änderung des ersten Winkels steht, insbesondere abhängig davon, an welchem der beiden Rahmenbereiche die Referenzgeometrie für die Winkeländerung der inneren Aufnahmestange liegt.

Vorzugsweise stehen die inneren Aufnahmeflansche entweder mit einer ersten Verdrehsicherung oder mit einer zweiten Verdrehsicherung in Eingriff. Bevorzugt ist es, dass die inneren Aufnahmeflansche in der ersten Stellung des Rahmens mit der ersten Verdrehsicherung in Eingriff stehen, wobei die inneren Aufnahmeflansche in der zweiten Stellung des Rahmens mit der jeweils korrespondierenden zweiten Verdrehsicherung in Eingriff stehen. Es kann somit vorgesehen werden, dass in der ersten Stellung des Rahmens die inneren Aufnahmeflansche jeweils mit maximalem Abstand voneinander an der inneren Aufnahmestange vorgesehen sind, wobei sie mit der ersten Verdrehsicherung in Eingriff stehen. Wenn der Rahmen in die zweite Stellung gebracht wird, bei welcher die immer noch an den ersten Verdrehsicherungen festgelegten Aufnahmeflansche nicht mehr in der horizontalen relativ zum Boden, auf welchem der Rahmen steht, liegen würden, können die inneren Aufnahmeflansche in Richtung der Mitte der inneren Aufnahmestange verlagert werden, wobei sie außer Eingriff mit der ersten Verdrehsicherung und in Eingriff mit der zweiten Verdrehsicherung kommen, welches einhergeht mit einer Änderung der Winkelstellung um einen Winkelversatz. Dabei sind mit Vorteil die Aufnahmeflansche, wenn sie in Eingriff mit der zweiten Verdrehsicherung stehen, in der zweiten Stellung des Rahmens horizontal bezogen auf die Schwerkraft bzw. bezogen auf den Boden, auf welchem der Rahmen steht, angeordnet. Der Winkelversatz dient dabei dazu, die Verdrehbewegung der inneren Aufnahmestange beim Verlagern des Rahmens von der ersten Stellung in die zweite Stellung auszugleichen.

Mit Vorteil ist ein zweiter Aufnahmebereich am dritten Rahmenbereich vorgesehen ist, wobei der zweite Aufnahmebereich zwei hintere Aufnahmeflansche aufweist, an welchen eine Transporteinheit festlegbar ist. Der zweite Aufnahmebereich ist ähnlich dem ersten Aufnahmebereich für die Festlegung einer Transporteinheit am Rahmen vorgesehen. Die hinteren Aufnahmeflansche des zweiten Aufnahmebereiches weisen vorzugsweise die gleiche Eingriffsgeometrie für den form- und oder kraftschlüssigen Eingriff mit der Transporteinheit auf, wie die Aufnahmeflansche des ersten Aufnahmebereiches. Hierdurch ist es möglich, eine Transporteinheit entweder am ersten oder am zweiten Aufnahmebereich festzulegen. Besonders bevorzugt ist der zweite Aufnahmebereich am dritten Rahmenbereich beabstandet vom zweiten Schwenkbereich vorgesehen, sodass sich beim Verschwenken des zweiten und des dritten Rahmenbereiches zueinander, der zweite Aufnahmebereich parallel zur Längsrichtung des Kinderwagens verschiebt. Es kann auf diese Weise der für die Festlegung einer Transporteinheit benötigte Platz an die jeweilige Stellung des Rahmens angepasst werden. Weiterhin bevorzugt sind die hinteren Aufnahmeflansche in zumindest zwei verschiedenen Verdrehstellungen am dritten Rahmenbereich festlegbar, um eine horizontale Ausrichtung der am zweiten Aufnahmebereich festgelegten Transporteinheit zu gewährleisten. Die Festlegung der hinteren Aufnahmeflansche in zwei Verdrehpositionen ähnelt dabei der Einstellbarkeit der Verdrehposition der inneren Aufnahmeflansche an der inneren Aufnahmestange.

Weiterhin bevorzugt weist der Rahmen ein Frontteil auf, wobei das Frontteil am ersten Rahmenbereich festgelegt oder einstückig an diesem ausgebildet ist, wobei das Frontteil zwei Radlagerungen und eine Basis aufweist, wobei die Radlagerungen parallel zur ersten Schwenkachse verschiebbar an der Basis gelagert und mit zumindest zwei verschiedenen Abständen voneinander an der Basis festlegbar sind. Die Radlagerungen dienen besonders bevorzugt der Lagerung der Vorderräder eines Kinderwagens am Rahmen. Dabei können die entsprechenden Radlagerungen oder Radaufhängungen ähnlich der in ihrer Breite einstellbaren Anordnung der äußeren Aufnahmeflansche, teleskopisch in das Basisteil des Frontteils eingeschoben und aus diesem herausgezogen werden, wodurch sich die Spur der Vorderräder verbreitern oder verschmälern lässt. Besonders bevorzugt ist es dabei, dass in der ersten Stellung des Rahmens die Radlagerungen in ihrer maximal in das Basisteil eingeschobenen Stellung am Frontteil festgelegt sind. In der zweiten Stellung des Rahmens, in welcher dessen Länge vergrößert ist und gegebenenfalls ein höheres Gewicht durch eine Vielzahl von Transporteinheiten am Rahmen festgelegt ist, ist es bevorzugt, dass die Radlagerungen in ihrer maximal aus der Basis herausgezogenen Stellung am Frontteil festgelegt sind, wodurch die Spur in diesem Zustand verbreitert ist. Es kann auf diese Weise eine stabilere Fahrweise erreicht werden und die Gefahr eines Umkippens des Kinderwagens im entsprechend ausgestatteten Rahmen im Falle einer erhöhten Zuladung deutlich vermindert werden. Weiterhin bevorzugt sind die Radlagerungen jeweils um eine parallel zu der ersten Schwenkachse verlaufende Achse schwenkbar und in zumindest verschiedenen Schwenkstellungen am Basisteil festlegbar. Durch das Verschwenken der Radlagerungen wird die beim Verschwenken des ersten Rahmenbereiches auftretende Winkeländerung der Radlagerungen ausgeglichen. Hierdurch wird erreicht, dass sowohl in der ersten als auch in der zweiten Stellung des Rahmens, die Radlagerungen stets in der gleichen Stellung relativ zur Horizontalen gehalten sind. Die Vorderräder des Kinderwagens können auf diese Weise stets mit einem annähernd konstanten Versatz der Drehachse der Räder zur Schwenkachse der Radbefestigung, welche einen bestimmten Nachlauf ergibt, versehen werden, so dass das Fahrverhalten des Kinderwagens in der ersten und in der zweiten Stellung möglichst identisch ist. Mit Vorteil sind die hinteren Räder des Kinderwagens benachbart oder koaxial zum zweiten Schwenkbereich bzw. zur zweiten Schwenkachse angeordnet. Dieser Bereich ist, bevorzugt durch die Verstärkung mittels der Strebe oder Streben, besonders stabil ausgebildet und es können große Gewichtskräfte von und zu den Rädern übertragen werden.

Besonders bevorzugt weisen die Rahmenbereiche in der ersten Stellung des Rahmens die gleiche Erstreckung parallel zur ersten Schwenkachse auf wie in der zweiten Stellung. Mit anderen Worten sind an den Rahmenbereichen selbst keine teleskopisch erweiterbaren Geometrien vorgesehen, mit welchen die Breite des gesamten Rahmens vergrößert oder verkleinert werden kann. Durch den Verzicht auf derartige teleskopische Anordnung an den Rahmenbereichen sind diese deutlich steifer ausgelegt und es kann mit geringerem Materialeinsatz eine deutlich höhere Festigkeit des gesamten Rahmens erreicht werden. Hierdurch lässt sich nicht nur die Betriebssicherheit erhöhen und die Fehleranfälligkeit des Rahmens durch Verkanten einzelner teleskopisch verschiebbarer Bereiche zueinander verhindern, sondern es kann auch das Gesicht des Rahmens deutlich gesenkt werden. Im Rahmen der vorliegenden Erfindung ist es dabei insbesondere vorgesehen, nur die zur Festlegung von Lasten oder zur Erhöhung der Stabilität geeigneten Bereiche des Rahmens in ihrer Breite anpassen zu können. Auch kann die Länge des Rahmens durch einfaches Verschwenken des ersten und des zweiten Rahmenbereichs zueinander und des zweiten und des dritten Rahmenbereichs zueinander erreicht werden.

Mit Vorteil ist eine Strebe vorgesehen, welche beabstandet vom zweiten Schwenkbereich an den zweiten Rahmenbereich und den dritten Rahmenbereich festgelegt ist. Die Strebe dient damit zur Herstellung eines Fachwerks zwischen dem zweiten Rahmenbereich und dem dritten Rahmenbereich und dem zweiten Schwenkbereich, an welchem diese Rahmenbereiche schwenkbar aneinander festgelegt sind. Da über den dritten Rahmenbereich unter Umständen besonders hohe Hebelkräfte von einem Anwender auf den Rahmen übertragen werden, insbesondere um den Rahmen bzw. den Kinderwagen auf die Hinterräder zu stellen, um beispielsweise eine Bordsteinkante hochzufahren, müssen in diesem Bereich die größten Drehmomente übertragen werden können. Daher dient die Strebe zur zusätzlichen Stabilisierung des zweiten Schwenkbereichs, da zwischen der Strebe und den jeweiligen zwischen der Befestigungsposition der Strebe und dem zweiten Schwenkbereich liegenden Teilen der Rahmenbereiche ein Dreieck aufgespannt wird. Für den Fall, dass die beiden Rahmenbereiche jeweils zwei Rahmenelemente aufweisen, ist es bevorzugt, dass zwei Streben, je eine an jedem Rahmenelement, vorgesehen sind.

Besonders bevorzugt ist dabei einer der Befestigungspunkte der Strebe in der ersten Stellung des Rahmens in einem größeren Abstand vom zweiten Schwenkbereich angeordnet als in der zweiten Stellung des Rahmens. Durch das Einrichten von zwei Befestigungspunkten der Strebe an einem der Rahmenbereiche kann die Strebe zwei Verschwenkpositionen des dritten Rahmenbereichs relativ zum zweiten Rahmenbereich einstellen und sichern.

Alternativ zu der Festlegung der Strebe an zwei verschiedenen Befestigungspunkten an dem jeweiligen Rahmenbereich kann die Strebe vorzugsweise eine Länge aufweisen, wobei in der ersten Stellung des Rahmens die Länge der Strebe kürzer ist als in der zweiten Stellung des Rahmens. Mit Vorteil kann dabei die Verriegelung der jeweiligen Länge der Strebe kombiniert sein mit der zentralen Verriegelung, welche den Rahmen jeweils in der ersten oder in der zweiten Stellung sichert.

Mit Vorteil sind die Hinterräder des Kinderwagens in unmittelbarer Nachbarschaft oder direkt am zweiten Schwenkbereich festlegbar oder festgelegt. Besonders bevorzugt ist die zweite Schwenkachse dabei gleich der Drehachse der Hinterräder des Kinderwagens. Als unmittelbar benachbart wird im Rahmen der vorliegenden Erfindung ein Abstand der Drehachse der Hinterräder von der zweiten Schwenkachse von nicht mehr als 10 cm angesehen. Hierdurch ist es möglich, durch Druck auf den dritten Rahmenbereich, den Kinderwagen um die Drehachse der Hinterräder schwenkend zu kippen um beispielsweise eine Bordstein zu überwinden.

Weitere Vorteile und Merkmale der vorliegenden Erfindung ergeben sich aus der nachfolgenden Beschreibung mit Bezug auf die beigefügten Figuren. Einzelne Merkmale, die nur in einer der dargestellten Ausführungsformen gezeigt und beschrieben sind, können auch in anderen Ausführungsformen Anwendung finden sofern dies nicht explizit ausgeschlossen wurde oder sich aufgrund technischer Gegebenheiten verbietet.

Es zeigen:
- Fig. 1: eine perspektivische Ansicht einer bevorzugten Ausführungsform des erfindungsgemäßen Rahmens in der ersten Stellung,
- Fig. 2: eine Seitenansicht des in Fig. 1 gezeigten Rahmens,
- Fig. 3: eine perspektivische Ansicht des Rahmens im zweiten Zustand mit drei Transporteinheiten,
- Fig. 4: eine Seitenansicht des in Fig. 3 gezeigten Rahmens,
- Fig. 5: eine perspektivische Ansicht des ersten Schwenkbereiches der in den zuvor gezeigten Ausführungsformen von unten,
- Fig. 6A: eine schematische Ansicht der inneren Aufnahmestange längs der ersten Schwenkachse,
- Fig. 6B: eine schematische Ansicht einer bevorzugten Ausführungsform des inneren Aufnahmeflansches,
- Fig.7A: eine schematische Ansicht einer bevorzugten Ausführungsform des ersten Schwenkbereiches im ersten Zustand,
- Fig.7B: eine schematische Ansicht einer bevorzugten Ausführungsform des ersten Schwenkbereiches im zweiten Zustand,
- Fig. 8A: eine schematische Ansicht der Geometrieverhältnisse an einer Ausführungsform des Rahmens im ersten Zustand, und
- Fig. 8B: eine schematische Ansicht der Geometrieverhältnisse an einer Ausführungsform des Rahmens im zweiten Zustand.

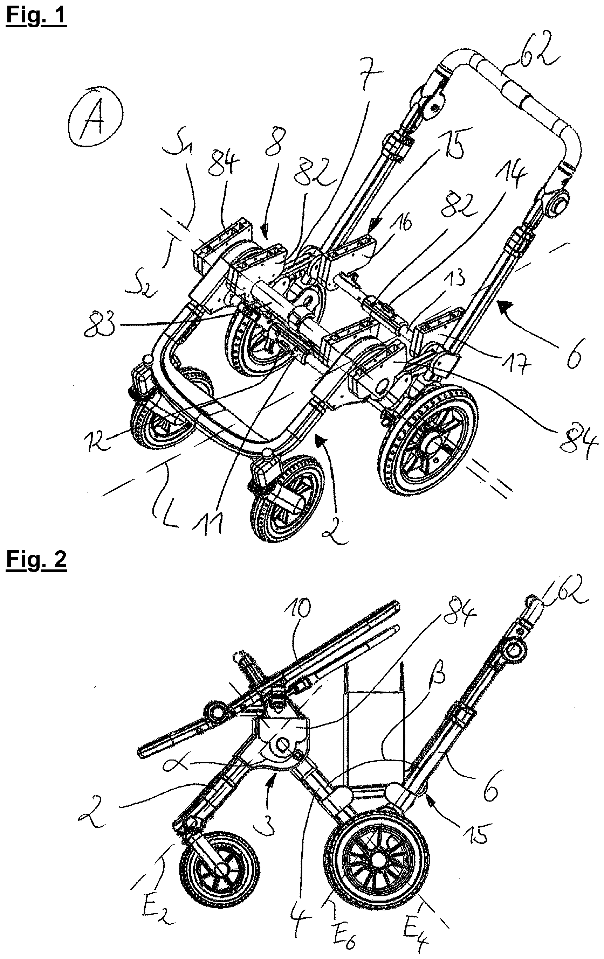

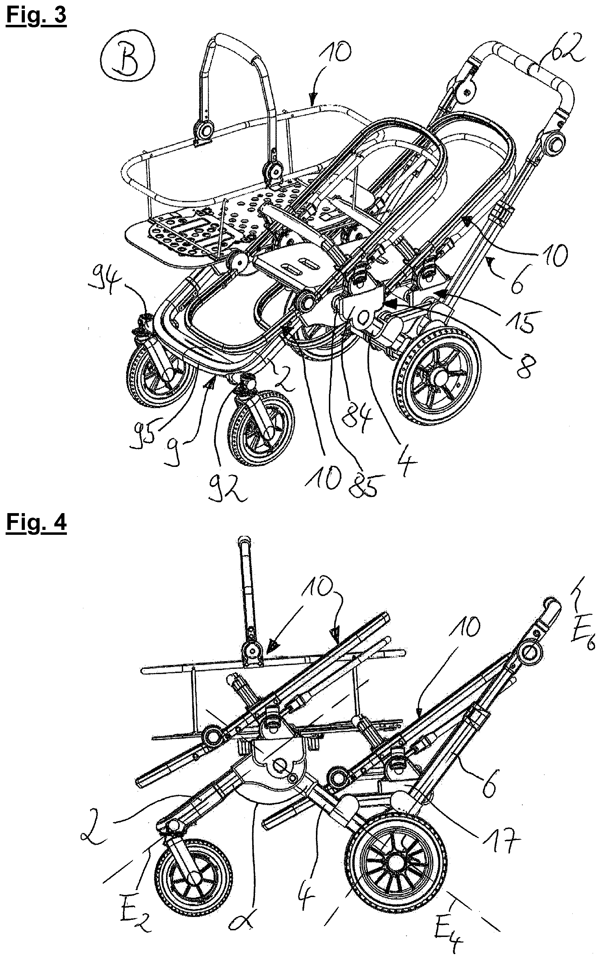

Der in Fig. 1 gezeigte Rahmen weist einen ersten Rahmenbereich 2, einen zweiten Rahmenbereich 4 (verdeckt) und einen dritten Rahmenbereich 6 auf. Der erste Rahmenbereich 2 ist in einem Schwenkbereich 3 schwenkbar am zweiten Rahmenbereich 4 festgelegt. Zur Begrenzung der Schwenkbarkeit zwischen dem ersten Rahmenbereich 2 und dem zweiten Rahmenbereich 4 ist eine Sicherungseinheit 11 vorgesehen, welche formschlüssig derart im Schwenkbereich 3 angreift, dass eine Schwenkbewegung zwischen dem ersten Rahmenbereich 2 und dem zweiten Rahmenbereich 4 in der Regel verhindert ist. Durch Drücken der Sicherungsbetätigung 12 kann der Anwender diese Schwenkbewegungsverriegelung lösen und den ersten Rahmenbereich 2 relativ zum zweiten Rahmenbereich 4 von der ersten Stellung A in die zweite Stellung B (siehe Fig. 3) schwenken. Der erste Aufnahmebereich 8 weist zwei innere Aufnahmeflansche 82 auf, welche an einer inneren Aufnahmestange 83 festgelegt sind. Weiterhin weist der erste Aufnahmebereich 8 zwei äußere Aufnahmeflansche 84 auf, welche jeweils an einer (in Fig. 1 nicht gezeigten) äußeren Aufnahmestange 85 festgelegt sind. Bevorzugt sind in der ersten Stellung A des Rahmens nur die inneren Aufnahmeflansche 82 des ersten Aufnahmebereiches dafür vorgesehen, mit einer Transporteinheit 10 (siehe Fig. 3) in Eingriff zu gelangen. Die äußeren Aufnahmeflansche 84 sind in dieser Stellung möglichst nah an der ersten Gelenkanordnung 3 angeordnet, um die Abmessungen des Rahmens klein zu halten. Der dritte Rahmenbereich 6 ist schwenkbar zum zweiten Rahmenbereich 4 gelagert, wobei eine Strebe 7 vorgesehen ist, welche beabstandet vom zweiten Schwenkbereich 5 jeweils mit dem zweiten Rahmenbereich 4 und dem dritten Rahmenbereich 6 in formschlüssigem Eingriff steht. Diese Strebe 7 sichert den dritten Rahmenbereich 6 in einer bestimmten Verschwenkstellung relativ zum zweiten Rahmenbereich 4. Mit Vorteil sind, wie in Fig. 1 gezeigt, zwei Streben 7 vorgesehen, welche mit jeweils einer der Seiten des jeweiligen Rahmenbereiches 4, 6 in formschlüssigem Eingriff stehen. Die Strebe 7 ist in verschiedenen Positionen am zweiten Rahmenbereich 6 in formschlüssigen Eingriff bringbar, wobei eine Verriegelungsvorrichtung 13 vorgesehen ist, welche die Befestigungsposition der Strebe 7 am dritten Rahmenbereich 6 festlegt. Der Anwender kann diese Verriegelungsvorrichtung 13 über die Verriegelungsbetätigung 14 lösen und den Befestigungspunkt oder vorzugsweise beide Befestigungspunkte der beiden Streben 7 entlang des dritten Rahmenbereiches 6 verschieben, wodurch sich gleichzeitig auch die Winkelstellung zwischen dem zweiten Rahmenbereich 4 und dem dritten Rahmenbereich 6 verändert. Auf diese Weise lässt sich die Winkelstellung des dritten Rahmenbereiches 6, an welchem vorzugsweise der Handgriff 62 für den händischen Eingriff des Anwenders vorgesehen ist, an die jeweilige Stellung des restlichen Rahmens und insbesondere die Anzahl der am Rahmen festgelegten Transporteinheiten 10 anpassen. So kann, indem die Strebe 7 in der Befestigungsposition am dritten Rahmenbereich 6, welche näher am zweiten Schwenkbereich 5 angeordnet ist, der dritte Rahmenbereich 6 derart nach hinten schwenken, dass eine Hebelkraft zum Anheben der Vorderräder des mit dem Rahmen ausgestatteten Kinderwagens wesentlich geringer sein muss und somit der Anwender auch bei vollbeladenem Rahmen mit insgesamt drei Transporteinheiten 10 keine wesentlich größeren Kräfte aufbringen muss, als beim nur mit einer Transporteinheit 10 beladenen Rahmen. Weiterhin ist am dritten Rahmenbereich 6 ein zweiter Aufnahmebereich 15 mit zwei hinteren Aufnahmeflanschen 16, 17 vorgesehen. Der zweite Aufnahmebereich 15 dient, insbesondere in der in Fig. 3 und 4 gezeigten zweiten Stellung des Rahmens, der Festlegung zumindest einer weiteren Transporteinheit 10.

Fig. 2 zeigt die in Fig. 1 bereits erläuterte Ausführungsform des erfindungsgemäßen Rahmens in einer Seitenansicht. Deutlich wird dabei der erste Winkel α zwischen der im ersten Rahmenbereich 2 liegenden ersten Ebene E₂ und der im zweiten Rahmenbereich 4 liegenden zweiten Ebene E₄. Der zweite Winkel β liegt zwischen der zweiten Ebene E₄ und der im dritten Rahmenbereich 6 liegenden dritten Ebene E₆. Die Veränderung des ersten und des zweiten Winkels α, β bei einer Umstellung des Rahmens von der ersten Stellung A in die zweite Stellung B lässt sich insbesondere durch Vergleich der Figuren 2 und 4 nachvollziehen. Bevorzugt ist weiterhin, dass sich die Rahmenbereiche 2, 4, 6 im Wesentlichen parallel zu der jeweils in dem Rahmenbereich liegenden Ebene E₂, E₄ und E₆ erstrecken. Mit anderen Worten weisen die Rahmenbereiche ihre jeweils größte Erstreckung entlang oder parallel zu der jeweiligen Ebene auf. Im ersten Schwenkbereich 3 und dem zweiten Schwenkbereich 5 sind vorzugsweise Verstärkungen vorgesehen, welche aus den Ebenen E₂, E₄ und E₆ herausragen, um in diesen Bereichen große Hebelkräfte übertragen zu können.

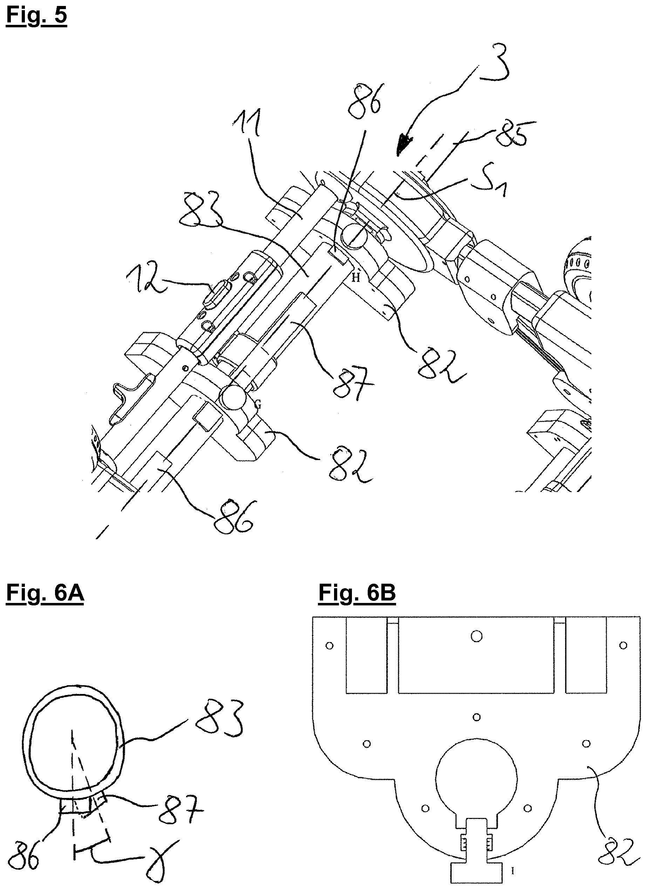

Fig. 3 zeigt eine perspektivische Ansicht der bereits in den Figuren 1 und 2 gezeigten Ausführungsformen des Rahmens in der zweiten Stellung B, wobei drei Transporteinheiten 3 an dem Rahmen festgelegt sind. Die beiden Transporteinheiten 10, welche am ersten Aufnahmebereich 8 festgelegt sind, stehen dabei jeweils mit einem äußeren Aufnahmeflansch 84 und einem inneren Aufnahmeflansch 82 in formschlüssiger und/oder kraftschlüssiger Verbindung. Hierfür sind die inneren Flanschabschnitte 82 zur Rahmenmitte hin verschoben, so dass jeweils mit der innenliegenden Seite der jeweiligen Transporteinheit in Eingriff bringbar sind. Weiterhin bevorzugt weist der Rahmen ein Frontteil 9 auf, welches insbesondere dafür vorgesehen ist, die Vorderräder des Kinderwagens festzulegen. Die äußeren Aufnahmeflansche 84 sind an jeweils einer äußeren Aufnahmestange 85 festgelegt, welche in dieser Stellung des Rahmens aus der inneren Aufnahmestange 83 herausgezogen ist. In der bevorzugten und in den Figuren 1 bis 3 gezeigten Ausführungsform ist das Frontteil zumindest bereichsweise einstückig mit dem ersten Rahmenbereich 2 ausgebildet. Am Frontteil 9 sind vorzugsweise zwei Radlagerungen 92, 94 vorgesehen, welche in eine Basis 95 des Frontteils 9 einschiebbar und über einen Verrastmechanismus festlegbar sind. Die teleskopartige Verschiebbarkeit der beiden Radlagerungen 92, 94 im Basisteil 95 hat den Vorteil, dass die Spurbreite der Vorderräder des Kinderwagens verbreitert werden kann, um in der zweiten Stellung B, in welcher mit Vorteil mehr Gewicht vom Kinderwagen transportiert werden kann, eine höhere Stabilität zu erreichen. Fig. 4 zeigt, analog zu Fig. 2, die in Fig. 3 gezeigte Ausführungsform des erfindungsgemäßen Rahmens in der zweiten Stellung B in einer Seitenansicht. Fig. 5 zeigt eine Ansicht des Rahmens im Bereich des ersten Schwenkbereiches 3 von der Unterseite des Rahmens her. Deutlich erkennbar ist dabei die innere Aufnahmestange 83 des ersten Aufnahmebereiches 8, an welcher vorzugsweise außen zwei erste Verdrehsicherungen 86 und innen eine zweite Verdrehsicherung 87 angeordnet ist. Die Verdrehsicherungen 86, 87 sind als Vorsprung ausgebildet und dafür geeignet, mit den jeweiligen inneren Aufnahmeflanschen 82 in formschlüssigen Eingriff zu gelangen. Wie in Fig. 6A gezeigt, sind dabei, in Blickrichtung entlang der ersten Schwenkachse S₁ die erste und die zweite Verdrehsicherung 86, 87 um einen Winkelversatz γ zueinander versetzt bzw. verdreht angeordnet. Dieser Winkelversatz γ dient dazu, einen, im Detail in Fig. 6B gezeigten inneren Aufnahmeflansch sowohl in der ersten als auch in der zweiten Stellung A, B des Rahmens jeweils horizontal bezogen auf den Boden, auf welchem der Rahmen steht oder abrollt, anzuordnen. Mit anderen Worten wird bei dem Verstellen des Rahmens von der ersten Stellung A in die zweite Stellung B die innere Aufnahmestange 83 ebenfalls mit verdreht, wobei diese Verdrehung der inneren Aufnahmestange 83 dazu führen würde, dass auch die inneren Aufnahmeflansche in einer aus der horizontal herausgedrehten Position am Rahmen angeordnet wären. Um diese Verdrehung der inneren Aufnahmestange 83 auszugleichen, weisen die erste und die zweite Verdrehsicherung 86, 87 einen Winkelversatz zueinander auf. Die inneren Aufnahmeflansche 82 sind dabei je nach Stellung des Rahmens jeweils entweder an den ersten Verdrehsicherungen 86 (in der ersten Stellung des Rahmens A) oder an den zweiten Verdrehsicherungen 87 (in der zweiten Stellung B des Rahmens) festgelegt. Fig. 6B zeigt einen solchen Aufnahmeflansch in der Seitenansicht, wobei der kreisförmige Abschnitt des Eingriffsabschnittes für den Eingriff mit der inneren Aufnahmestange 83 und der rechteckige Rücksprung für den Eingriff mit der jeweiligen Verdrehsicherung 86, 87. Weiterhin ist ein Sicherungsstift gezeigt, welcher durch eine Feder in Eingriff mit einer entsprechenden Aussparung an der jeweiligen Verdrehsicherung 86, 87 in Eingriff gehalten wird, um die Befestigungsposition des Aufnahmeflansches 82 an der inneren Aufnahmestange 83 zu sichern. Mit Vorteil sind die äußeren Aufnahmeflansche 84 identisch wie die inneren Aufnahmeflansche 82 ausgebildet, wodurch sich eine Austauschbarkeit der entsprechenden Komponenten erreichen lässt.

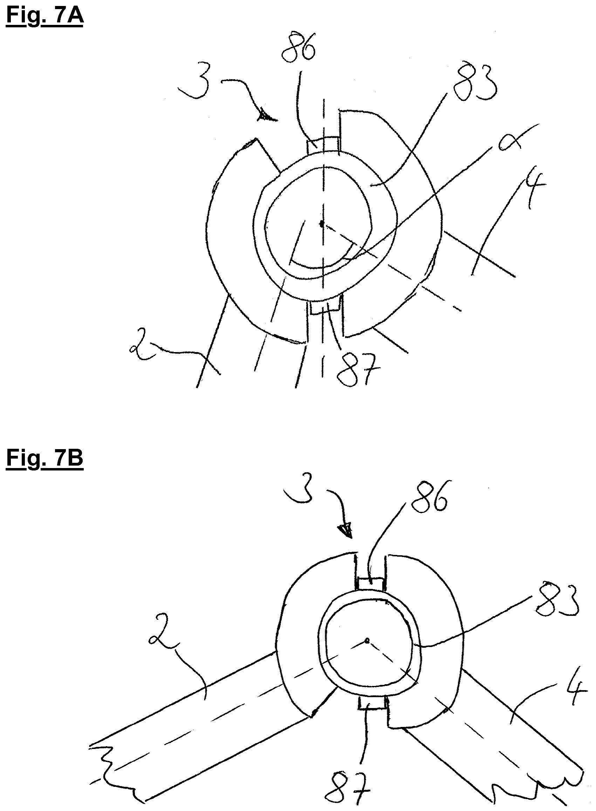

Die Figuren 7A und 7B zeigen eine alternative Möglichkeit, die innere Aufnahmestange 83 und die daran festgelegten inneren Aufnahmeflansche 82 jeweils in der Horizontalen zu halten. Dabei sind im ersten Schwenkbereich 3 am ersten Rahmenbereich 2 und am zweiten Rahmenbereich 4 jeweils Backen vorgesehen, welche mit der ersten Verdrehsicherung 86 und/oder der zweiten Verdrehsicherung 87 in Eingriff gelangen, je nachdem in welcher Verschwenkposition sich der erste Rahmenbereich relativ zum zweiten Rahmenbereich befindet. Fig. 7A zeigt dabei die erste Stellung des Rahmens, in welcher der erste Winkel α seinen kleinstmöglichen Wert annimmt. In dieser Stellung stehen die beiden unteren Flanken, welche am ersten und am zweiten Rahmenbereich vorgesehen sind, mit der zweiten Verdrehsicherung 87 in Eingriff. Werden die Rahmenbereiche 2, 4 in die zweite Stellung B verschwenkt, bei welcher der erste Winkel α einen größeren Wert als in der ersten Stellung A aufweist, so gelangen statt der unteren Flanken nun die oberen Flanken mit der ersten Verdrehsicherung 86 in Eingriff, wobei die innere Aufnahmestange 83 und die Verdrehsicherungen in derselben Lage relativ zur Horizontalen gehalten sind wie in der ersten Stellung A. Der Vorteil dieser Ausführungsform gegenüber der in den Figuren 5 und 6A gezeigten Ausführungsform ist, dass ein Verschieben der inneren Aufnahmeflansche 82 längs der inneren Aufnahmestange 83 nicht mehr erforderlich ist, um die entsprechende richtige Einbaulage der inneren Aufnahmeflansche 82 je nach Stellung des Rahmens zu erreichen.

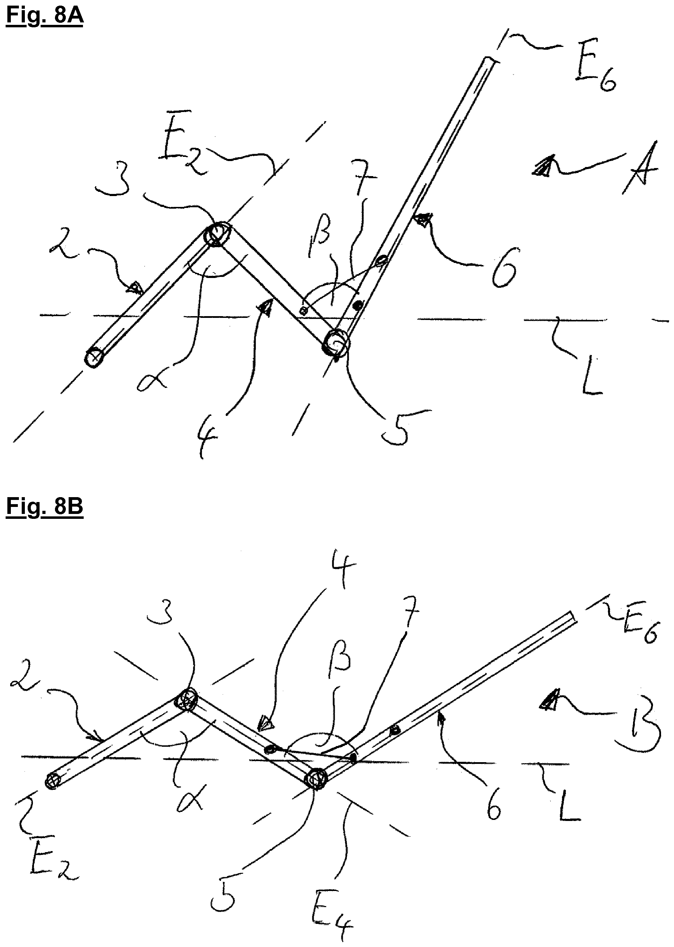

Die Figuren 8A und 8B zeigen schematisch die geometrischen Verhältnisse am Rahmen in der ersten Stellung A (Fig. 8A) und in der zweiten Stellung B (Fig. 8B). In der zweiten Stellung B weist der Rahmen dabei eine größere Erstreckung längs oder parallel zur Längsachse L des Rahmens auf als in der ersten Stellung A. Die Winkelveränderungen im ersten Winkel α und im zweiten Winkel β sind dabei in den Figuren 8A und 8B überdeutlich dargestellt. Weiterhin ist gezeigt, dass die Strebe 7 in der zweiten Stellung B des Rahmens in der Befestigungslage am dritten Rahmenbereich 6 festgelegt ist, welche näher am zweiten Schwenkbereich 5 angeordnet ist.

### Bezugszeichen:

- 2: - erster Rahmenbereich
- 3: - erster Schwenkbereich
- 4: - zweiter Rahmenbereich
- 5 -: zweiter Schwenkbereich
- 6 -: dritter Rahmenbereich
- 7 -: Strebe
- 8 -: erster Aufnahmebereich
- 9 -: Frontteil
- 10 -: Transporteinheit
- 11 -: Sicherungseinheit
- 12 -: Sicherungsbetätigung
- 13 -: Verriegelungsvorrichtung
- 14 -: Verriegelungsbetätigung
- 15 -: zweiter Aufnahmebereich
- 16 -: hinterer Aufnahmeflansch
- 17 -: hinterer Aufnahmeflansch
- 82 -: innerer Aufnahmeflansch
- 83 -: innere Aufnahmestange
- 84 -: äußerer Aufnahmeflansch
- 85 -: äußere Aufnahmestange
- 86 -: erste Verdrehsicherung
- 87 -: zweite Verdrehsicherung
- 92, 94 -: Radlagerung
- 95 -: Basis
- A -: erste Stellung
- α -: erster Winkel
- B -: zweite Stellung
- β -: zweiter Winkel
- γ -: Winkelversatz
- E₂ -: erste Ebene
- E₄ -: zweite Ebene
- E₆ -: dritte Ebene
- L -: Längsachse
- S₁ -: erste Schwenkachse
- S₂ -: zweite Schwenkachse

## Patentansprüche

1. Rahmen, insbesondere Rahmen eines Kinderwagens, umfassend einen ersten Rahmenbereich (2), einen zweiten Rahmenbereich (4) und einen dritten Rahmenbereich (6),
wobei der erste Rahmenbereich (2) in einem ersten Schwenkbereich (3) schwenkbar um eine erste Schwenkachse (Si) am zweiten Rahmenbereich (4) festgelegt ist, wobei der zweite Rahmenbereich (4) in einem zweiten Schwenkbereich (5) schwenkbar um eine zweite Schwenkachse (S₂) am dritten Rahmenbereich (6) festgelegt ist,
wobei ein erster Aufnahmebereich (8) an zumindest einem der Rahmenbereiche (2,4,6) vorgesehen ist, an welchen eine Transporteinheit (10) formschlüssig festlegbar ist,
wobei der Rahmen in eine erste Stellung (A) oder eine zweite Stellung (B) bringbar ist,
wobei der Rahmen in der ersten Stellung (A) dafür ausgelegt ist, zumindest eine Transporteinheit (10) aufzunehmen, und
wobei der Rahmen in der zweiten Stellung (B) dafür ausgelegt ist, zumindest zwei Transporteinheiten (10) aufzunehmen
wobei der Verbund aus dem ersten und dem zweiten Rahmenbereich (2, 4) in der zweiten Stellung (B) eine größere Erstreckung längs einer Längsachse (L) als in der ersten Stellung (A) aufweist,
**dadurch gekennzeichnet, dass** die Verlängerung des Verbundes aus erstem und zweitem Rahmenbereich (2, 4) längs der Längsachse (L) ausschließlich durch ein Verschwenken der Rahmenbereiche (2, 4) zueinander im ersten Schwenkbereich (3) erreicht ist.

2. Rahmen nach Anspruch 1,
wobei der Verbund aus dem zweiten und dem dritten Rahmenbereich (4, 6) in der zweiten Stellung (B) eine größere Erstreckung längs einer Längsachse (L) als in der ersten Stellung (A) aufweist,
wobei die Verlängerung des Verbundes aus zweitem und drittem Rahmenbereich (4, 6) längs der Längsachse (L) auch durch ein Verschwenken der Rahmenbereiche (4, 6) zueinander im zweiten Schwenkbereich (5) verursacht ist.

3. Rahmen nach einem der vorhergehenden Ansprüche,
wobei erste Schwenkbereich (3) in der zweiten Stellung (B) tiefer angeordnet ist als in der ersten Stellung (A) ist.

4. Rahmen nach einem der vorhergehenden Ansprüche,
wobei der erste Aufnahmebereich (8) in der zweiten Stellung (B) eine größere Erstreckung quer zu einer Längsachse (L) aufweist als in der ersten Stellung (A).

5. Rahmen nach einem der vorhergehenden Ansprüche,
wobei der erste Rahmenbereich (2) und/oder der zweite Rahmenbereich (4) und/oder der dritte Rahmenbereich (6) in der ersten Stellung (A) dieselbe Breite aufweist wie in der zweiten Stellung (B).

6. Rahmen nach einem der vorhergehenden Ansprüche,
wobei sich der erste Rahmenbereich (2) in Wesentlichen in einer ersten Ebene (E₂) erstreckt,
wobei sich der zweite Rahmenbereich (4) im Wesentlichen in einer zweiten Ebene (E₄) erstreckt,
wobei sich der dritte Rahmenbereich (6) in Wesentlichen in einer dritten Ebene (E₆) erstreckt.

7. Rahmen nach Anspruch 6,
wobei der zwischen der ersten Ebene (E₂) und der zweiten Ebene (E₄) aufgespannte erste Winkel (α) in der ersten Stellung (A) des Rahmens kleiner ist als in der zweiten Stellung (B).

8. Rahmen nach einem der vorhergehenden Ansprüche,
wobei der erste Aufnahmebereich (8) am ersten Schwenkbereich (3) vorgesehen ist,
wobei der erste Aufnahmebereich (8) zwei innere Aufnahmeflansche (82) aufweist, welche an einer inneren Aufnahmestange (83) form- und/oder kraftschlüssig festlegbar sind.

9. Rahmen nach Anspruch 8,
wobei der erste Aufnahmebereich (8) zumindest einen äußeren Aufnahmeflansch (84) aufweist, welcher an einer äußeren Aufnahmestange (85) festgelegt ist, wobei die äußere Aufnahmestange (85) längs der ersten Schwenkachse (S₁) in die innere Aufnahmestange (83) teleskopisch einschiebbar ist.

10. Rahmen nach einem der Ansprüche 8 oder 9,
wobei die innere Aufnahmestange (83) eine erste Verdrehsicherung (86) und eine zweite Verdrehsicherung (87) aufweist, welche formschlüssig mit dem ersten Schwenkbereich (3) und/oder mit den inneren Aufnahmeflanschen (82) in Eingriff bringbar ist/sind, um die innere Aufnahmestange (83) und/oder die inneren Aufnahmeflansche (82) gegen Verdrehung relativ zum ersten Rahmenbereich (2) und/oder zum zweiten Rahmenbereich (4) zu sichern.

11. Rahmen nach einem der vorhergehenden Ansprüche,
wobei ein zweiter Aufnahmebereich (15) am dritten Rahmenbereich (6) vorgesehen ist,
wobei der zweite Aufnahmebereich (15) zwei hintere Aufnahmeflansche (16, 17) aufweist, an welchen eine Transporteinheit (10) festlegbar ist.

12. Rahmen nach einem der vorhergehenden Ansprüche,
aufweisend ein Frontteil (9),
wobei das Frontteil (9) am ersten Rahmenbereich (2) festgelegt ist,
wobei das Frontteil (9) zwei Radlagerungen (92, 94) und eine Basis (95) aufweist,
wobei die Radlagerungen (92, 94) parallel zur ersten Schwenkachse (Si) verschiebbar an der Basis (95) gelagert und mit zumindest zwei verschiedenen Abständen voneinander an der Basis (95) festlegbar sind.

13. Rahmen nach einem der vorhergehenden Ansprüche,
wobei die Hinterräder des Kinderwagens in unmittelbarer Nachbarschaft oder direkt am zweiten Schwenkbereich (5) festlegbar sind.

## Claims

1. A frame, in particular a frame of a pram, comprising a first frame area (2), a second frame area (4) and a third frame area (6),
wherein the first frame area (2) is fixed to the second frame area (4) in a first pivot area (3) so as to be pivotable about a first pivot axis (S₁),
wherein the second frame area (4) is fixed to the third frame area (6) in a second pivot area (5) so as to be pivotable about a second pivot axis (S₂), wherein a first receiving area (8) is provided on at least one of the frame areas (2, 4, 6) to which a transport unit (10) can be positively fixed,
wherein the frame can be brought into a first position (A) or a second position (B),
wherein in the first position (A) the frame is designed to receive at least one transport unit (10), and
wherein the frame in the second position (B) is designed to receive at least two transport units (10),
wherein the composite of the first and the second frame area (2, 4) has a greater extension along a longitudinal axis (L) in the second position (B) than in the first position (A),
**characterised in that** the extension of the composite of the first and second frame areas (2, 4) along the longitudinal axis (L) is achieved exclusively by pivoting the frame areas (2, 4) relative to one another in the first pivoting area (3).

2. The frame according to claim 1,
wherein the composite of the second and the third frame area (4, 6) has a greater extension along a longitudinal axis (L) in the second position (B) than in the first position (A),
wherein the extension of the composite of second and third frame area (4, 6) along the longitudinal axis (L) is also caused by a pivoting of the frame areas (4, 6) relative to one another in the second pivoting area (5).

3. The frame according to any one of the preceding claims,
wherein first pivot area (3) is arranged lower in the second position (B) than in the first position (A).

4. The frame according to any one of the preceding claims,
wherein the first receiving area (8) in the second position (B) has a greater extension transverse to a longitudinal axis (L) than in the first position (A).

5. The frame according to any one of the preceding claims,
wherein the first frame area (2) and/or the second frame area (4) and/or the third frame area (6) has the same width in the first position (A) as in the second position (B).

6. The frame according to any one of the preceding claims,
wherein the first frame area (2) extends substantially in a first plane (E₂),
wherein the second frame area (4) extends substantially in a second plane (E₄),
wherein the third frame area (6) extends substantially in a third plane (E₆).

7. The frame according to claim 6,
wherein the first angle (α) spanned between the first plane (E₂) and the second plane (E₄) is smaller in the first position (A) of the frame than in the second position (B)

8. The frame according to any one of the preceding claims,
wherein the first receiving area (8) is provided at the first pivot area (3),
wherein the first receiving area (8) has two inner receiving flanges (82) which can be fixed positively and/or non-positively to an inner receiving rod (83).

9. The frame according to claim 8,
wherein the first receiving area (8) comprises at least one outer receiving flange (84) which is fixed to an outer receiving rod (85), the outer receiving rod (85) being telescopically insertable into the inner receiving rod (83) along the first pivot axis (Si).

10. The frame according to one of claims 8 or 9,
wherein the inner receiving rod (83) comprises a first anti-rotation device (86) and a second anti-rotation device (87) which can be brought into positive engagement with the first pivot area (3) and/or with the inner receiving flanges (82) in order to secure the inner receiving rod (83) and/or the inner receiving flanges (82) against rotation relative to the first frame area (2) and/or to the second frame area (4).

11. The frame according to any one of the preceding claims,
wherein a second receiving area (15) is provided on the third frame area (6),
wherein the second receiving area (15) has two rear receiving flanges (16, 17) to which a transport unit (10) can be fixed

12. The frame according to any one of the preceding claims,
comprising a front part (9),
wherein the front part (9) is fixed to the first frame region (2),
wherein the front part (9) comprises two wheel bearings (92, 94) and a base (95),
wherein the wheel bearings (92, 94) are mounted on the base (95) so as to be displaceable parallel to the first pivot axis (Si) and are fixable to the base (95) at at least two different distances from one another.

13. The frame according to any one of the preceding claims,
wherein the rear wheels of the pram can be fixed in the immediate vicinity or directly on the second pivot area (5).

## Revendications

1. Cadre, en particulier cadre d'une poussette pour bébé, comprenant une première zone de cadre (2), une seconde zone de cadre (4) et une troisième zone de cadre (6),
dans lequel
la première zone de cadre (2) est immobilisée à la seconde zone de cadre (4) dans une première zone de pivotement (3) en pouvant pivoter autour d'un premier axe de pivotement (S₁),
la seconde zone de cadre (4) est immobilisée à la troisième zone de cadre (6) dans une seconde zone de pivotement (5) en pouvant pivoter autour d'un second axe de pivotement (S₂),
une première zone de réception (8) est prévue sur l'une au moins des zones de cadre (2, 4, 6) à laquelle une unité de transport (10) peut être immobilisée par coopération de forme,
le cadre peut être amené dans une première position (A) ou dans une seconde position (B),
le cadre dans la première position (A) est conçu pour recevoir au moins une unité de transport (10), et
le cadre dans la seconde position (B) est conçu pour recevoir au moins deux unités de transport (10),
l'assemblage de la première et de la seconde zone de cadre (2, 4) présente, dans la seconde position (B), une plus grande extension le long d'un axe longitudinal (L) que dans la première position (A),
**caractérisé en ce que**
le prolongement de l'assemblage de la première et de la seconde zone de cadre (2, 4) le long de l'axe longitudinal (L) est obtenu exclusivement par un pivotement des zones de cadre (2, 4) l'une par rapport à l'autre dans la première zone de pivotement (3).

2. Cadre selon la revendication 1,
dans lequel
l'assemblage de la seconde et de la troisième zone de cadre (4, 6) présente, dans la seconde position (B), une plus grande extension le long d'un axe longitudinal (L) que dans la première position (A),
le prolongement de l'assemblage de la seconde et de la troisième zone de cadre (4, 6) le long de l'axe longitudinal (L) est également provoquée par un pivotement des zones de cadre (4, 6) l'une par rapport à l'autre dans la seconde zone de pivotement (5).

3. Cadre selon l'une des revendications précédentes,
dans lequel
la première zone de pivotement (3) est disposée plus bas dans la seconde position (B) que dans la première position (A).

4. Cadre selon l'une des revendications précédentes,
dans lequel
la première zone de réception (8) présente, dans la seconde position (B), une plus grande extension transversalement à un axe longitudinal (L) que dans la première position (A).

5. Cadre selon l'une des revendications précédentes,
dans lequel
la première zone de cadre (2) et/ou la seconde zone de cadre (4) et/ou la troisième zone de cadre (6) présente(nt) la même largeur dans la première position (A) que dans la seconde position (B).

6. Cadre selon l'une des revendications précédentes,
dans lequel
la première zone de cadre (2) s'étend sensiblement dans un premier plan (E₂),
la seconde zone de cadre (4) s'étend sensiblement dans un second plan (E₄),
la troisième zone de cadre (6) s'étend sensiblement dans un troisième plan (E₆).

7. Cadre selon la revendication 6,
dans lequel
le premier angle (α) défini entre le premier plan (E₂) et le second plan (E₄) est plus petit dans la première position (A) du cadre que dans la seconde position (B).

8. Cadre selon l'une des revendications précédentes,
dans lequel
la première zone de réception (8) est prévue sur la première zone de pivotement (3),
la première zone de réception (8) présente deux brides de réception intérieures (82) qui peuvent être immobilisées à une tige de réception intérieure (83) par coopération de forme et/ou de force.

9. Cadre selon la revendication 8,
dans lequel
la première zone de réception (8) comprend au moins une bride de réception extérieure (84) qui est immobilisée à une tige de réception extérieure (85),
la tige de réception extérieure (85) peut être insérée de manière télescopique dans la tige de réception intérieure (83) le long du premier axe de pivotement (S₁).

10. Cadre selon l'une des revendications 8 ou 9,
dans lequel
la tige de réception intérieure (83) présente un premier dispositif de blocage anti-rotation (86) et un second dispositif de blocage anti-rotation (87) qui peut/peuvent être mis en engagement par coopération de forme avec la première zone de pivotement (3) et/ou avec les brides de réception intérieures (82) afin de bloquer la tige de réception intérieure (83) et/ou les brides de réception intérieures (82) à l'encontre d'une rotation par rapport à la première zone de cadre (2) et/ou à la seconde zone de cadre (4).

11. Cadre selon l'une des revendications précédentes,
dans lequel
une seconde zone de réception (15) est prévue sur la troisième zone de cadre (6),
la seconde zone de réception (15) comporte deux brides de réception arrière (16, 17) sur lesquelles une unité de transport (10) peut être immobilisée.

12. Cadre selon l'une des revendications précédentes,
comprenant une partie avant (9),
la partie avant (9) étant immobilisée à la première partie de cadre (2),
la partie avant (9) comportant deux paliers de roue (92, 94) et une base (95), les paliers de roue (92, 94) étant montés sur la base (95) de manière à pouvoir être déplacés parallèlement au premier axe de pivotement (S₁) et pouvant être immobilisés à la base (95) à au moins deux distances différentes l'une de l'autre.

13. Cadre selon l'une des revendications précédentes,
dans lequel
les roues arrière de la poussette peuvent être immobilisées à proximité immédiate ou directement sur la seconde zone de pivotement (5).
